# EUROPÄISCHE PATENTANMELDUNG

(11) **EP 4 230 814 A1**
(43) Veröffentlichungstag der Anmeldung: **23.08.2023**
(21) Anmeldenummer: 23155875.0
(22) Anmeldetag: 09.02.2023
(51) Int. Cl.: E03C 1/264

(54) **SCHMUTZRÜCKHALTEVORRICHTUNG FÜR EINEN ABLAUF EINES SANITÄRBECKENS**

(30) Priorität: 22.02.2022 DE 102022201844
(71) Anmelder: BLANCO GmbH + Co KG, 75038 Oberderdingen (DE)
(72) Erfinder: Koska, Reinhard, 76228 Karlsruhe (DE); Frank, Manuel, 75038 Oberderdingen (DE); Kahl-Marburger, Georg, 74172 Neckarsulm (DE)
(74) Vertreter: Ullrich & Naumann PartG mbB

(57) **Zusammenfassung**

Die Erfindung betrifft eine Schmutzrückhaltevorrichtung (1) für einen Ablauf eines Sanitärbeckens, insbesondere eines Spülbeckens oder dergleichen, umfassend
eine Siebfläche (4), die von einem höheren (4e) zu einem tieferen Flächenbereich (4d,4f) verlaufend ausgebildet ist, und
eine Griffeinrichtung (2,3), die im Bereich des tieferen Flächenbereichs an der Siebfläche angeordnet ist,
wobei
die Griffeinrichtung eine Flussunterbrechungseinrichtung, insbesondere Abrisskante (K), für den Fluss (F1,F2) einer Flüssigkeit aufweist, welche in Richtung des tieferen Flächenbereichs fließt, dergestalt, dass durch die Abrisskante der Fluss der Flüssigkeit im tieferen Bereich zumindest teilweise gebrochen wird.

## Beschreibung

Die Erfindung betrifft eine Schmutzrückhaltevorrichtung für einen Ablauf eines Sanitärbeckens, insbesondere eines Spülbeckens oder dergleichen, umfassend eine Siebfläche, die von einem höheren zu einem tieferen Flächenbereich verlaufend ausgebildet ist, und eine Griffeinrichtung, die im Bereich des tieferen Flächenbereichs an der Siebfläche angeordnet ist.

Die Erfindung betrifft weiter einen Ablaufkelch zum Einsatz in einem Ablaufventil eines sanitären Aufnahmebehälters, insbesondere eines Spülbeckens, Waschbeckens oder dergleichen.

Obwohl die vorliegende Erfindung allgemein auf beliebige Schmutzrückhaltevorrichtungen anwendbar ist, wird die vorliegende Erfindung in Bezug auf Schmutzrückhaltevorrichtungen in Ablaufgarnituren für Spülbecken erläutert.

Spülbecken, beispielsweise in Küchen, weisen üblicherweise eine Ablaufgarnitur auf, die zum Ablauf von Spülwasser aus dem Spülbecken dient. Damit Schmutz nicht in die an der Ablaufgarnitur angeschlossene Leitung gelangt, ist es bekannt geworden, hierfür sogenannte Siebkörbe zu werden, die einen Ablauf des Schmutzwassers ermöglichen und gleichzeitig gröberen Schmutz wie Essensreste oder dergleichen zurückzuhalten. Zur Reinigung weist der Siebkorb einen Griff auf, mit dem der Siebkorb aus der Ablaufgarnitur entnommen werden kann. Ein Nutzer entfernt anschließend die Schmutzreste und der Siebkorb wird dann wiederum gereinigt in die Ablaufgarnitur eingesetzt. Der Siebkorb ist dabei in bekannter Weise in Form einer flachen Schale ausgebildet, die Durchlassöffnungen für den Abfluss des Schmutzwassers aufweist. Darüber hinaus ist ebenfalls in bekannter Weise der Griff in der Mitte des Siebkorbs angeordnet. Für eine gute Greifbarkeit und um Irritationen beim Greifen zu vermeiden, ist der Griff und der Übergang von der Siebfläche zum Griff verrundet.

Nachteilig dabei ist, dass im Falle eines in einem ungünstigen Winkel auf die Siebfläche auftreffenden Flüssigkeitsstrahls, beispielsweise von einem Auslass einer über dem Siebkorb angeordneten Sanitärarmatur, die Flüssigkeit schnell in Richtung des Griffs fließt und von dort nach oben in Richtung des Nutzers der Sanitärarmatur gelenkt wird beziehungsweise spritzt.

Eine Aufgabe der vorliegenden Erfindung ist es daher, eine Schmutzrückhaltevorrichtung und einen Ablaufkelch zur Verfügung zu stellen, welche kostengünstig herstellbar sind, auf einfache und zuverlässige Weise ein Spritzen eines Flüssigkeitsstrahls in Richtung eines Nutzers zumindest teilweise unterdrücken beziehungsweise verhindern und gleichzeitig eine hohe optische Anmutung und Haptik bereitstellen.

Eine weitere Aufgabe der vorliegenden Erfindung ist es, eine alternative Schmutzrückhaltevorrichtung und einen alternativen Ablaufkelch zur Verfügung zu stellen.

Die vorliegende Erfindung löst die vorstehend genannten Aufgaben bei einer Schmutzrückhaltevorrichtung für einen Ablauf eines Sanitärbeckens, insbesondere eines Spülbeckens oder dergleichen, umfassend eine Siebfläche, die von einem höheren zu einem tieferen Flächenbereich verlaufend ausgebildet ist, und eine Griffeinrichtung, die im Bereich des tieferen Flächenbereichs an der Siebfläche angeordnet ist, dadurch, dass die Griffeinrichtung eine Flussunterbrechungseinrichtung, insbesondere eine Abrisskante, für den Fluss einer Flüssigkeit aufweist, welche in Richtung des tieferen Flächenbereichs fließt, dergestalt, dass durch die Flussunterbrechungseinrichtung der Fluss der Flüssigkeit im tieferen Bereich zumindest teilweise gebrochen wird.

Die vorliegende Erfindung löst die vorstehend genannten Aufgaben zudem bei einem Ablaufkelch zum Einsatz in einem Ablaufventil eines sanitären Aufnahmebehälters, insbesondere eines Spülbeckens, Waschbeckens oder dergleichen, dadurch, dass eine Schmutzrückhaltevorrichtung gemäß einem der Ansprüche 1-14 angeordnet ist.

Einer der damit erzielten Vorteile ist, dass auf einfache und zuverlässige Weise ein Spritzen eines Flüssigkeitsstrahls in Richtung eines Nutzers zumindest teilweise unterdrückt werden kann. Durch die Abrisskante wird der Fluss der Flüssigkeit, insbesondere zumindest teilweise, in die ursprüngliche Richtung gelenkt, zumindest jedoch wird ein Fluss der Flüssigkeit teilweise in einem spitzen Winkel, senkrecht zur Betätigungsrichtung der Schmutzrückhaltevorrichtung, insbesondere in Form der vertikalen Richtung, vermindert. Ein weiterer Vorteil ist, dass gleichzeitig eine hohe optische Anmutung und Haptik bereitgestellt werden kann.

Der Begriff "Sanitär" ist im weitesten Sinne zu verstehen und bezieht sich, insbesondere in den Ansprüchen, vorzugsweise in der Beschreibung, allgemein auf den Küchenbereich, den Bad- oder Waschküchenbereich sowie den Heizungsbereich.

Der Begriff "Siebfläche" ist im weitesten Sinne zu verstehen und bezieht sich, insbesondere in den Ansprüchen, vorzugsweise in der Beschreibung, allgemein auf beliebige dreidimensionale Körper, Einrichtungen oder Vorrichtungen, die einen Abschnitt, eine Fläche oder einen Bereich aufweisen, der eine Sieb- und/oder Rückhaltewirkung für Partikel oder dergleichen in einer Flüssigkeit bereitstellt.

Der Begriff "Flussunterbrechungseinrichtung" ist im weitesten Sinne zu verstehen und bezieht sich, insbesondere in den Ansprüchen, vorzugsweise in der Beschreibung, allgemein auf eine beliebige Vor- oder Einrichtung, die einen Abschnitt, eine Fläche oder einen Bereich aufweist, der ausgebildet ist, die Fluss- oder Strömungsrichtung einer Flüssigkeit abrupt und/oder mit unstetiger Krümmung zu ändern, dergestalt, dass zumindest ein Teil der Flüssigkeit im Wesentlichen zurück in die Ursprungsrichtung des Flusses der Flüssigkeit gelenkt wird. Die Flussunterbrechungseinrichtung stellt die genannte Wirkung einer abrupten Flussrichtungsänderung bereit, insbesondere bei langsamem und/oder bei wenig Flüssigkeitsmenge, verglichen mit dem Volumen der Siebfläche und Höhe der Griffeinrichtung über dem tiefsten Bereich der Siebfläche.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist die Schmutzrückhaltevorrichtung einteilig oder mehrteilig, insbesondere vierteilig, ausgebildet. Vorteil einer einteiligen Ausbildung ist eine einfache Handhabung. Vorteil einer mehrteiligen Ausbildung ist eine einfache Herstellung und höhere Flexibilität hinsichtlich der Ausbildung der jeweiligen Teile.

Gemäß einer weiteren vorteilhaften Weiterbildung der Erfindung ist die Griffeinrichtung lösbar an der Siebfläche angeordnet, insbesondere mittels einer Rastverbindung. Einer der damit erzielten Vorteile ist eine schnelle Montage und Demontage, was eine besonders zuverlässige und gründliche Reinigung der Schmutzrückhaltevorrichtung ermöglicht.

Gemäß einer weiteren vorteilhaften Weiterbildung der Erfindung ist die Griffeinrichtung in einer Öffnung der Siebfläche festlegbar. Damit wird eine einfache und schnelle Festlegung der Griffeinrichtung an der Siebfläche bereitgestellt.

Gemäß einer weiteren vorteilhaften Weiterbildung der Erfindung ist die Griffeinrichtung einteilig oder mehrteilig ausgebildet, insbesondere zweiteilig, umfassend zumindest einen Grundkörper und eine Kappe. Vorteil hiervon ist, dass eine schnelle und einfache Montage der Griffeinrichtung bereitgestellt werden kann. Darüber hinaus ist mittels einer Kappe eine einfache Individualisierung für unterschiedliche Nutzer möglich. So kann beispielsweise die Kappe mit einer Beschichtung, insbesondere Lackierung oder dergleichen, versehen werden. Eine einteilige Griffeinrichtung ist einfach in der Herstellung und ermöglicht eine schnelle Montage an der Siebfläche.

Gemäß einer weiteren vorteilhaften Weiterbildung der Erfindung ist die Griffeinrichtung an der Siebfläche auf unterschiedlichen Seiten der Siebfläche festlegbar. Vorteil hiervon ist, dass eine besonders zuverlässige Festlegung der Griffeinrichtung ermöglicht wird, da die Griffeinrichtung auf diese Weise beispielsweise gegenüber einer Krafteinwirkung parallel zur Betätigungsrichtung gesichert wird.

Gemäß einer weiteren vorteilhaften Weiterbildung der Erfindung sind die Griffeinrichtung und die Öffnung zusammenwirkend ausgebildet, um eine Verdrehsicherung der Griffeinrichtung in der Öffnung bereitzustellen, insbesondere wobei die Öffnung kleeblattförmig ausgebildet ist. Einer der damit erzielten Vorteile ist, dass eine zuverlässige Handhabung der Schmutzrückhaltevorrichtung ermöglicht wird und Irritationen beim Nutzer bei der Bedienung der Schmutzrückhaltevorrichtung vermieden werden.

Gemäß einer weiteren vorteilhaften Weiterbildung der Erfindung ist die Flussunterbrechungseinrichtung, insbesondere die Abrisskante, am Grundkörper angeordnet. Vorteil hiervon ist, dass ein hoher optischer beziehungsweise wertiger Eindruck beim Bedienen der Schmutzrückhaltevorrichtung erhalten werden kann.

Gemäß einer weiteren vorteilhaften Weiterbildung der Erfindung ist die Kappe an dem Grundkörper form-, stoff- und/oder reibschlüssig, insbesondere mittels Verpressen und/oder Verkleben, festgelegt. Vorteil hiervon ist eine einfache und gleichzeitig zuverlässige Festlegung der Kappe am Grundkörper.

Gemäß einer weiteren vorteilhaften Weiterbildung der Erfindung ragt die Kappe zumindest teilweise über die Flussunterbrechungseinrichtung, insbesondere die Abrisskante, hinaus. Dies ver- beziehungsweise überdeckt einerseits die Flussunterbrechungseinrichtung, insbesondere die Abrisskante, sodass eine hohe optische Anmutung erhalten bleibt. Gleichzeitig kann auf diese Weise die Wirkung der Flussunterbrechungseinrichtung, insbesondere der Abrisskante, noch erhöht werden, indem teilweise ein in drei Richtungen umschlossener Raum, insbesondere in Form einer Kavität, gebildet wird.

Gemäß einer weiteren vorteilhaften Weiterbildung der Erfindung weist der Grundkörper umfänglich verteilt zumindest zwei radiale Vorsprünge auf. Damit kann auf zuverlässige Weise ein reibschlüssiges Festlegen der Kappe am Grundkörper bereitgestellt werden, indem die Kappe über die Vorsprünge geschoben wird. Um dies zu erleichtern, können die Vorsprünge in der entsprechenden Richtung hin abgeschrägt, gerundet oder dergleichen ausgebildet sein.

Gemäß einer weiteren vorteilhaften Weiterbildung der Erfindung umfasst die Flussunterbrechungseinrichtung, insbesondere die Abrisskante, einen Rücksprung, insbesondere wobei der Rücksprung zumindest eine Kante von mindestens 90 Grad umfasst. Damit wird auf besonders zuverlässige Weise einerseits die Abrisskante optisch weniger auffällig gestaltet, andererseits die Wirkung der Abrisskante zur Unterbrechung und teilweisen Umleitung des Flusses der Flüssigkeit verbessert.

Gemäß einer weiteren vorteilhaften Weiterbildung der Erfindung weist die Griffeinrichtung zumindest eine Griffdurchlassöffnung, insbesondere in Form eines Schlitzes, auf. Damit wird beispielsweise stehende Flüssigkeit im Bereich der Griffeinrichtung vermieden, gleichzeitig kann zum Unterdrücken des Spritzens, Flüssigkeit direkt aus diesem Bereich abgeführt werden. Vorzugsweise ist die Siebfläche im Bereich der Griffeinrichtung hier eben beziehungsweise horizontal ausgebildet.

Gemäß einer weiteren vorteilhaften Weiterbildung der Erfindung weist die Siebfläche zumindest zwei Siebdurchlassöffnungen zum Flüssigkeitsdurchlass auf, insbesondere in Form von Schlitzen. Damit kann auf einfache und optisch ansprechende Weise ein Zurückhalten von Schmutz und dergleichen bei gleichzeitigem Abführen von Flüssigkeit ermöglicht werden.

Gemäß einer weiteren vorteilhaften Weiterbildung der Erfindung sind die Siebdurchlassöffnungen zumindest teilweise im tieferen Bereich angeordnet, insbesondere mit der Öffnung der Siebfläche verbunden. Vorteil hiervon ist eine einfache Herstellung der Siebfläche und der Öffnung bei gleichzeitig größerem Flüssigkeitsabfluss.

Gemäß einer weiteren vorteilhaften Weiterbildung der Erfindung weist die Siebfläche zumindest einen aus der Siebfläche vorragenden Steg auf, insbesondere wobei der zumindest eine Steg in Form eines Rings um die Öffnung der Siebfläche angeordnet ist. Damit wird einerseits die Zuverlässigkeit der Festlegung der Griffeinrichtung, andererseits die Stabilität der Siebfläche verbessert. Ebenso wird eine einfachere Herstellung ermöglicht.

Gemäß einer weiteren vorteilhaften Weiterbildung der Erfindung weist der Steg Stegdurchlassöffnungen auf, insbesondere wobei die Stegdurchlassöffnungen und/oder die Griffdurchlassöffnungen zu den Siebdurchlassöffnungen der Siebfläche korrespondieren und/oder mit diesen verbunden sind. Einer der damit erzielten Vorteile ist, dass ein noch größerer Flüssigkeitsabfluss ermöglicht wird.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen die
- Figuren 1 und 2: ein Siebkörbchen gemäß einer Ausführungsform der vorliegenden Erfindung in einer Explosionsdarstellung und im Querschnitt; die
- Figuren 3 und 4: ein Siebkörbchen gemäß einer Ausführungsform der vorliegenden Erfindung in einer Explosionsdarstellung und im Querschnitt; die
- Figuren 5 und 6: ein Siebkörbchen gemäß einer Ausführungsform der vorliegenden Erfindung in einer Explosionsdarstellung und im Querschnitt; die
- Figuren 7 und 8: ein Siebkörbchen gemäß einer Ausführungsform der vorliegenden Erfindung in einer Explosionsdarstellung und im Querschnitt; die
- Figuren 9 und 10: ein Siebkörbchen gemäß einer Ausführungsform der vorliegenden Erfindung in einer Explosionsdarstellung und im Querschnitt; die
- Figuren 11, 12, 13: ein Siebkörbchen gemäß einer Ausführungsform der vorliegenden Erfindung in einer Explosionsdarstellung, in einer Übersichtsdarstellung und im Querschnitt; und die
- Figuren 14 und 15: ein Siebkörbchen gemäß einer Ausführungsform der vorliegenden Erfindung in einer Explosionsdarstellung und im Querschnitt.

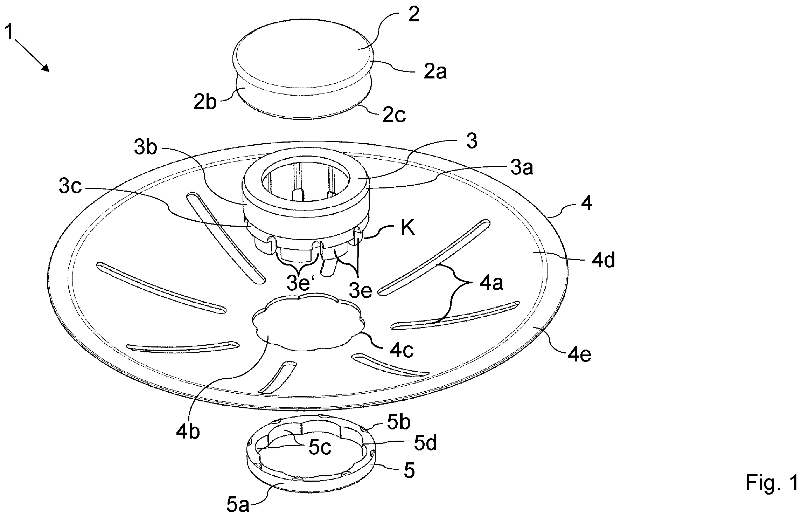

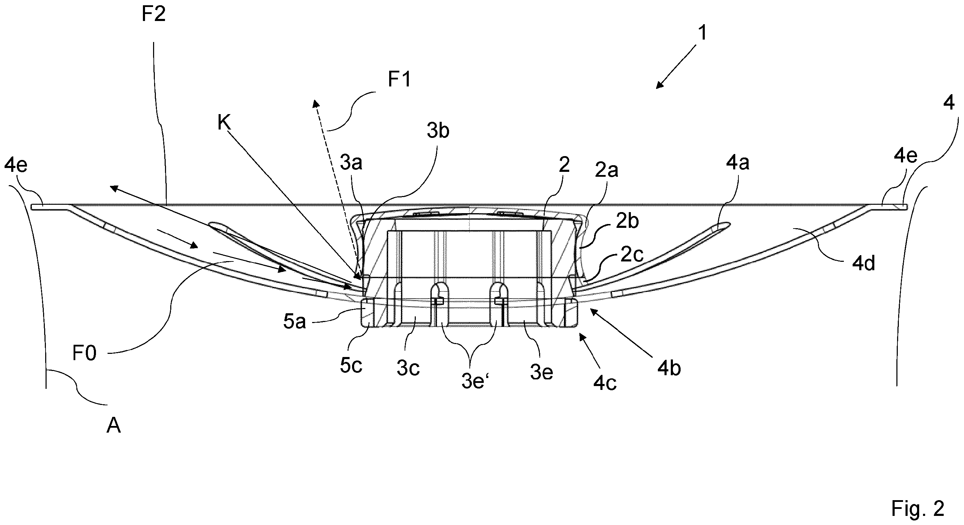

Figur 1 und 2 zeigen ein Siebkörbchen gemäß einer Ausführungsform der vorliegenden Erfindung in einer Explosionsdarstellung und im Querschnitt.

In den Figuren 1 und 2 ist ein Siebkörbchen 1 in einem Ablaufkelch A (nur Figur 2) gezeigt. Das Siebkörbchen 1 ist mehrteilig ausgebildet und umfasst eine Siebfläche 4 und einen Griff, umfassend einen Grundkörper 3, der eine Kappe 2 aufweist. Der Grundkörper 3 ist hierbei durch eine Öffnung 4b der Siebfläche 4 teilweise hindurchgeführt und mittels eines Sicherungsrings 5 auf der gegenüberliegenden Seite der Siebfläche 4 festgelegt.

Im Detail weist die im Wesentlichen zylinderförmige Kappe 2 in ihrem oberen Bereich 2a einen abgerundeten Vorsprung auf. Der mittlere Bereich 2b der Kappe ist in radialer Richtung nach innen gekrümmt, dergestalt, dass sich der Rand der Kappe 2 im unteren Bereich 2c im Wesentlichen den gleichen Außendurchmesser wie der obere Bereich 2a aufweist.

Der Grundkörper 3 ist im Wesentlichen in Form eines Rings ausgebildet. Im oberen Bereich 3a weist der Ring einen vorragenden, in Richtung der Siebfläche abgekanteten Absatz auf. Im mittleren Bereich 3b verläuft die Seitenfläche im Querschnitt gerade, im unteren Bereich 3c weist der Ring einen Rücksprung K zur Bildung der Abrisskante auf. Der Rücksprung K ist hierbei im Querschnitt dreiecksförmig ausgebildet, wobei zwischen mittlerem Bereich 3b und Abrisskante ein 90 Grad Winkel ausgebildet ist. Weiterhin weist der Grundkörper 3 im unteren Bereich 3c in vertikaler Richtung vorstehende Laschen 3e auf zwischen denen Schlitze 3e' ausgebildet sind.

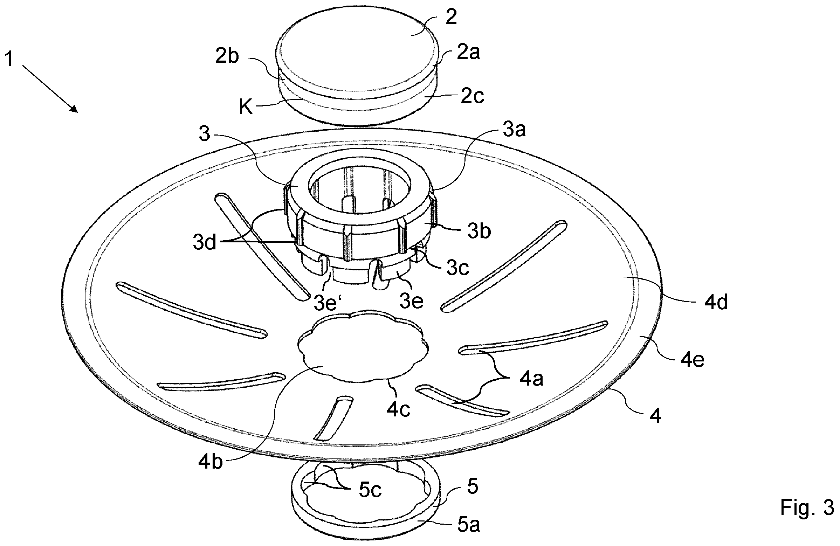

Fließt nun Flüssigkeit in Richtung F0, also in Richtung des Griffs 2, 3 wird der Fluss durch die Abrisskante K weniger stark nach oben abgelenkt (Bezugszeichen F2) als dies ohne Rücksprung K, insbesondere im Falle einer Verrundung der Fall wäre (Bezugszeichen F1). Analog gilt dies auch für die weiteren Figuren 3-10.

Die Siebfläche 4 ist in Form einer flachen Schüssel ausgebildet mit einem an der Außenseite umlaufenden flachen, horizontalen Rand 4e, der in eine gebogene, abfallende Fläche 4d übergeht. In der gebogenen Fläche 4d sind in radialer Richtung ausgerichtete längliche Schlitze 4a umfänglich regelmäßig verteilt angeordnet. Im tiefsten Bereich in der Mitte der Siebfläche 4 ist eine Öffnung 4b ausgebildet, die einen kleeblattförmigen Querschnitt aufweist.

Der Sicherungsring 5 ist zylinderförmig ausgebildet mit Umfangsfläche 5a und weist im Querschnitt auf seiner Innenseite einen zu der Öffnung 4b korrespondierenden, kleeblattförmigen Querschnitt mit Vertiefungen 5c auf. Auf seiner Oberseite, also der zur Siebfläche 4 orientierten Oberfläche, weist der Sicherungsring 5 vertikale Vorsprünge 5b auf, deren Position zu den Vertiefungen beziehungsweise Ausbuchtungen des kleeblattförmigen Verlaufs der Innenseite korrespondieren.

Zur Montage des Siebkörbchens 1 wird zunächst die Kappe 2 auf den Grundkörper 3 aufgesteckt und dadurch reibschlüssig und/oder stoffschlüssig, beispielsweise mittels Verkleben, festgelegt. Danach wird der in den Figuren 1 und 2 dargestellte untere Teil des Grundkörpers 3 durch die Öffnung 4b der Siebfläche 4 hindurchgesteckt, sodass die Laschen 3e durch die Öffnung 4b hindurchgreifen. Anschließend werden die Laschen 3e mit dem Sicherungsring 5 auf der gegenüberliegenden Seite festgelegt. Dies kann beispielsweise durch Verkleben der Laschen 3e mit dem Sicherungsring 5 erfolgen. Die Laschen 3e korrespondieren hierbei zu den Ausbuchtungen 4c der Innenseite der Öffnung 4b, die Schlitze 3e' zu den Vorsprüngen zwischen zwei Ausbuchtungen 4c. Auf diese Weise kann eine Verdrehsicherung des Griffs 2, 3 gegenüber der Siebfläche 4 bereitgestellt werden. Die vertikalen Vorsprünge 5b des Sicherungsrings 5 dienen zur korrekten Beabstandung des Sicherungsrings 5 und der Laschen 3e in Bezug auf die Öffnung 4b.

Kappe 2 und/oder Grundkörper 3 und/oder Siebfläche 4 und/oder Sicherungsring 5 können dabei jeweils zumindest teilweise, insbesondere vollständig, aus Metall und/oder Kunststoff hergestellt sein. Beispielsweise kann der Kunststoff Polyamid und Polypropylen umfassen und/oder glasfaserverstärkt ausgebildet sein. Die Kappe 2 und/oder die Siebfläche 4 können beschichtet sein, beispielsweise mit einer Farbe oder dergleichen.

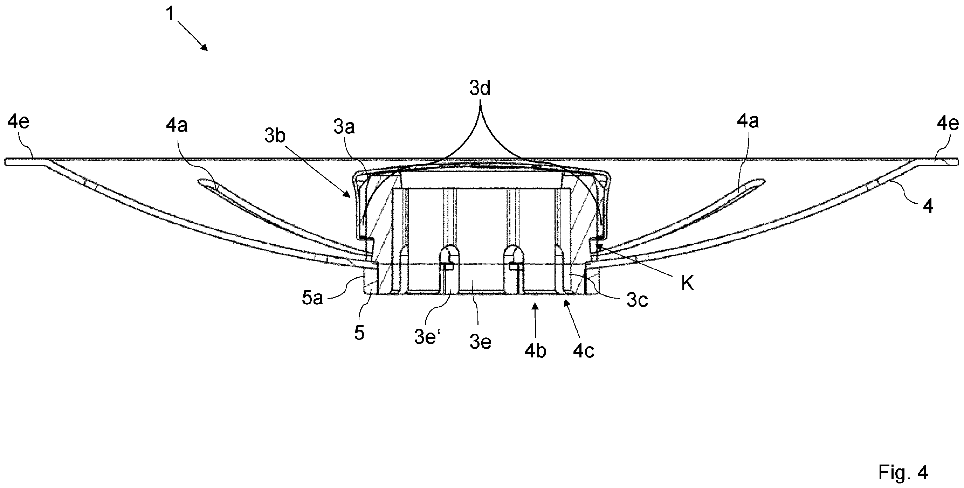

Figur 3 und Figur 4 zeigen ein Siebkörbchen gemäß einer Ausführungsform der vorliegenden Erfindung in einer Explosionsdarstellung und im Querschnitt.

Die Figuren 3 und 4 zeigen im Wesentlichen ein Siebkörbchen 1 gemäß Figur 1 und 2. Im Unterschied zu dem Siebkörbchen 1 gemäß Figur 1 und 2 weist das Siebkörbchen 1 gemäß den Figuren 3 und 4 nun eine Kappe 2 auf, die im mittleren Bereich 2b radial nach innen gewölbt ausgebildet ist. Mit anderen Worten ist diese im mittleren Bereich im Querschnitt kreissegmentförmig ausgebildet. Darüber hinaus kann der untere Rand des unteren Bereichs 2c der Kappe 2 ganz oder teilweise radial nach innen umgebogen sein. Dies gilt ebenfalls für alle andere Ausführungsformen. Ebenso erstrecken sich über den oberen und mittleren Bereich 3a, 3b des Grundkörpers 3 radiale Vorsprünge 3d, die im Querschnitt eine Dreiecksform aufweisen, sich im Wesentlichen in vertikaler Richtung in den Bereichen 3a, 3b erstrecken und die in regelmäßiger Weise auf der radialen Außenseite des Grundkörpers 3 angeordnet sind.

Mittels der genannten Vorsprünge 3d kann die Kappe 2 auf dem Grundkörper 3 reibschlüssig festgelegt werden. Zur einfacheren Montage der Kappe 2 können die Vorsprünge 3d im oberen Bereich verrundet oder abgeflacht ausgebildet sein.

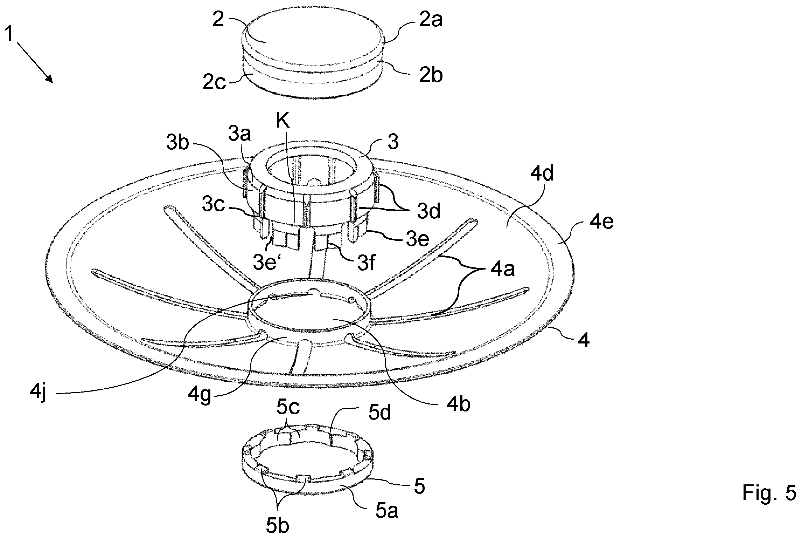

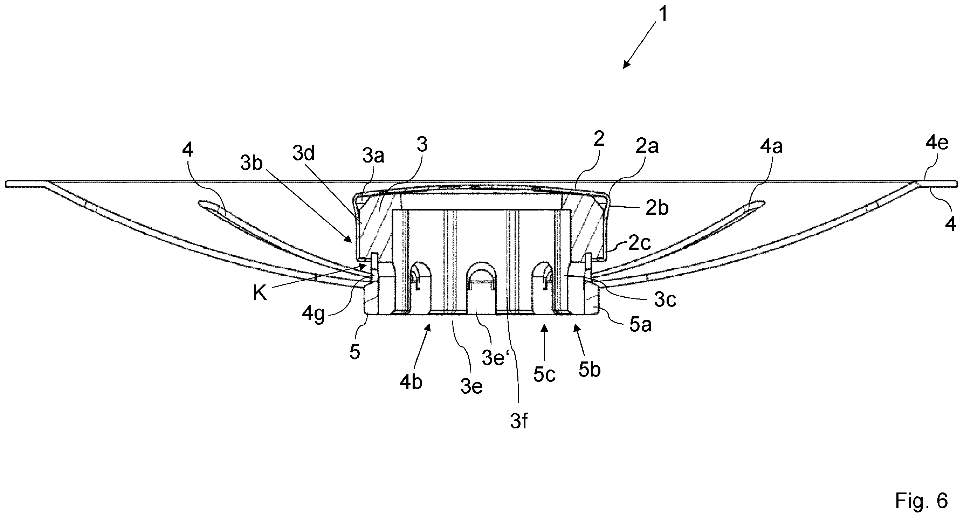

Figur 5 und Figur 6 zeigen ein Siebkörbchen gemäß einer Ausführungsform der vorliegenden Erfindung in einer Explosionsdarstellung und im Querschnitt.

Die Figuren 5 und 6 zeigen im Wesentlichen ein Siebkörbchen 1 gemäß Figur 3 und 4. Im Unterschied zu dem Siebkörbchen 1 gemäß Figur 3 und 4 weist das Siebkörbchen 1 gemäß den Figuren 5 und 6 nun Laschen 3e am Grundkörper 3 auf, die in Richtung der radialen Innenseite des Grundkörpers 3 nach hinten abgekantet sind. Mit anderen Worten sind die Laschen V-förmig ausgebildet, wobei die jeweilige Kante 3f vertikal verläuft und radial weiter innen angeordnet ist.

Weiterhin weist die Siebfläche 4 im Vergleich zu der Siebfläche 4 gemäß der Figuren 1 bis 4 Unterschiede auf. Zum einen erstreckt sich um die Öffnung 4b ein vertikaler umlaufender Steg 4g in Richtung des Grundkörpers 3 nach oben, zum anderen sind die Öffnungsschlitze 4a mit der Öffnung 4b verbunden ebenso wie mit in vertikaler Richtung sich erstreckenden Stegdurchlassöffnungen 4j. Die vertikalen Vorsprünge 5b des Sicherungsrings 5 auf dessen Oberseite sind so ausgebildet, dass diese in die Öffnungsschlitze 4a der Siebfläche 4 im Bereich des Stegs 4g eingreifen. Ebenso greift die V-förmige Kante 3f der Laschen 3e in einen Vorsprung 5d der kleeblattförmigen Ausbildung der Innenfläche des Sicherungsrings 5 ein. Damit kann eine Verdrehsicherung bereitgestellt werden.

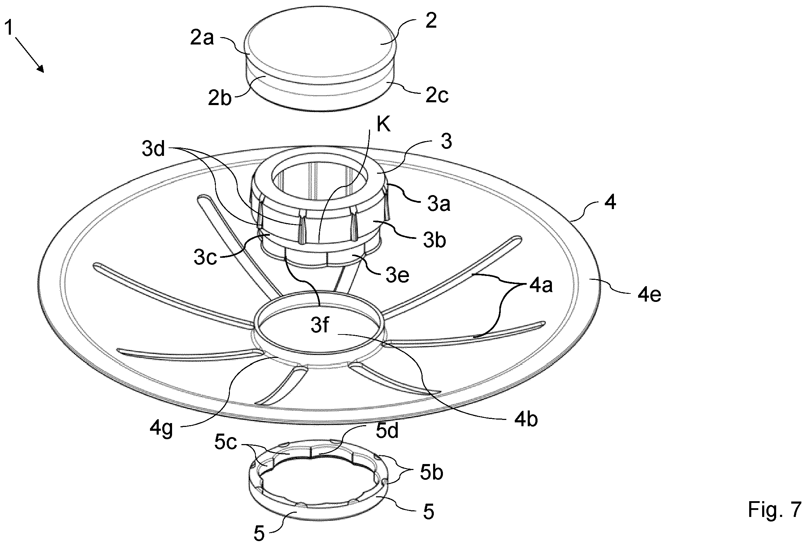

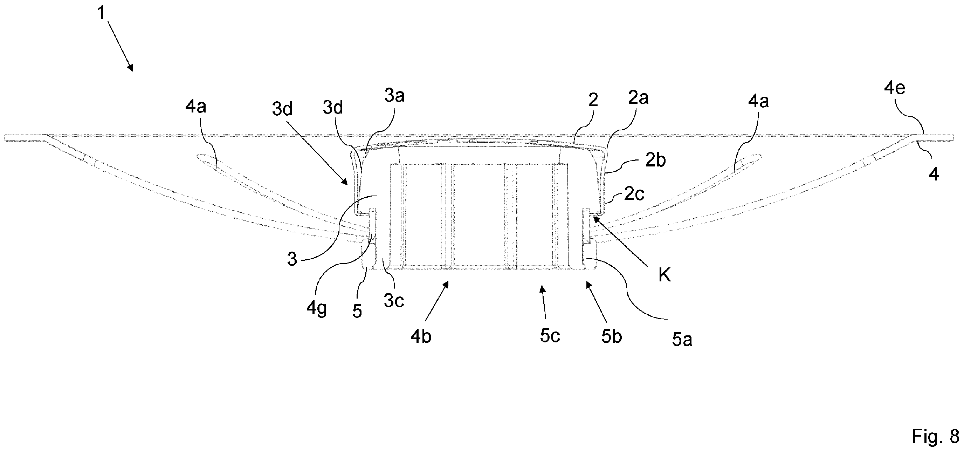

Figur 7 und Figur 8 zeigen ein Siebkörbchen gemäß einer Ausführungsform der vorliegenden Erfindung in einer Explosionsdarstellung und im Querschnitt.

Die Figuren 7 und 8 zeigen im Wesentlichen ein Siebkörbchen 1 gemäß Figur 5 und 6. Im Unterschied zu dem Siebkörbchen 1 gemäß Figur 5 und 6 weist das Siebkörbchen 1 gemäß den Figuren 7 und 8 nun Laschen 3e am Grundkörper 3 auf, die in Richtung der radialen Außenseite vorgewölbt sind. Insoweit ergibt sich eine umgekehrte "Kleeblatt"-Form. Schlitze (Bezugszeichen 3e' in den Figuren 1 bis 6) zwischen den Laschen 3e sind nicht mehr vorhanden.

Weiterhin weist die Siebfläche 4 im Vergleich zu der Siebfläche 4 gemäß der Figuren 1 bis 6 zumindest einen Unterschied auf. Die Öffnungsschlitze 4a des Siebkörbchens 1 der Figuren 7 und 8 erstrecken sich bis an die Öffnung 4b hin, sind jedoch mit dieser nicht verbunden. Ebenso erstrecken sich die Öffnungsschlitze 4a nicht in den Steg 4g. Die Kleeblattform des Sicherungsrings 5 korrespondiert mit der "Kleeblatt"-Form der Laschen 3e des Grundkörpers 3 zu dessen Festlegung an der Siebfläche 4, sodass auf diese Weise ein Formschluss - Bezugszeichen 3e und 5c und Bezugszeichen 3f und 5d greifen ineinander ein - und damit eine Verdrehsicherung bereitgestellt werden kann.

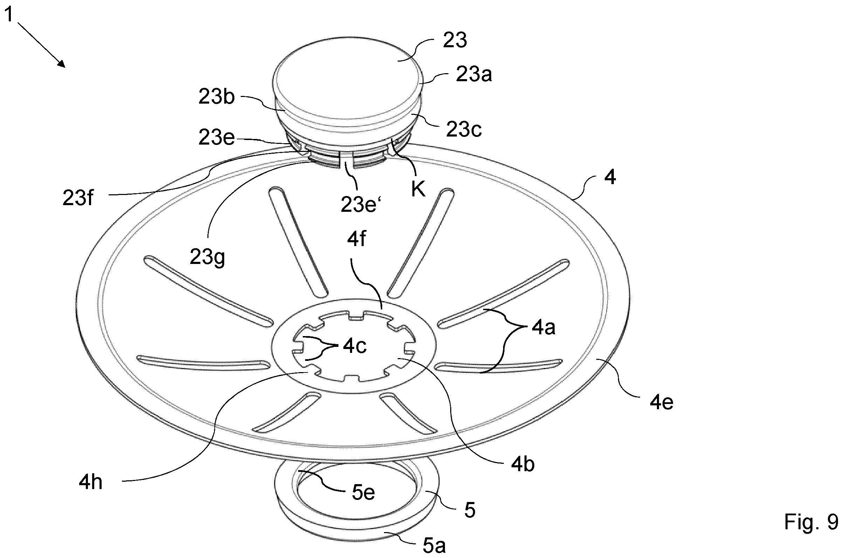

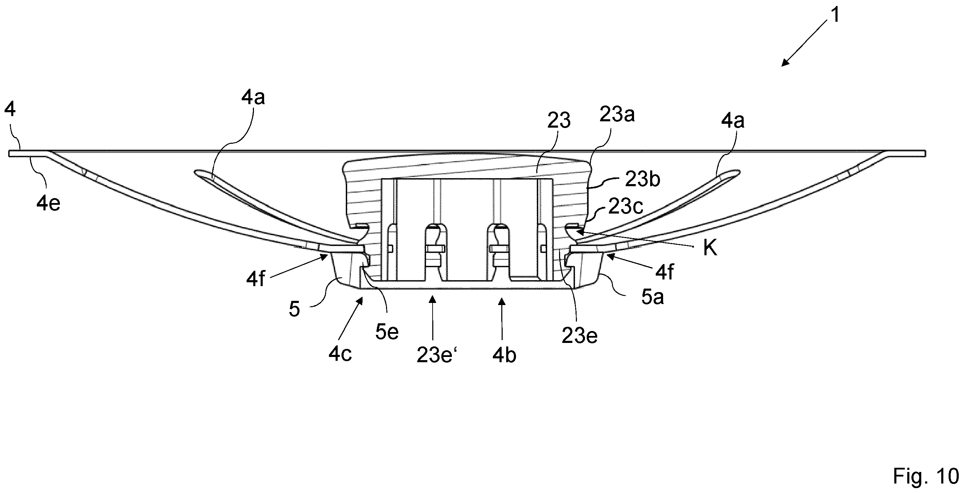

Figur 9 und Figur 10 zeigen ein Siebkörbchen gemäß einer Ausführungsform der vorliegenden Erfindung in einer Explosionsdarstellung und im Querschnitt.

Die Figuren 9 und 10 zeigen im Wesentlichen ein Siebkörbchen 1 gemäß Figur 3 und 4. Im Unterschied zu dem Siebkörbchen 1 gemäß Figur 3 und Figur 4 weist das Siebkörbchen 1 gemäß den Figuren 9 und 10 nun einen einteiligen Griff 23 auf, der an seiner Oberseite der Kappe 2 der Figuren 1 und 2 entspricht, insbesondere entsprechen im Wesentlichen die Bereiche 23a, 23b, 23c den Bereichen 2a, 2b, 2c der Kappe 2 gemäß Figur 3 und Figur 4. Auf der Unterseite weist der Griff 23, wie auch der Grundkörper 3 gemäß der Figuren 3 und 4, Laschen 23e und Schlitze 23e' umlaufend auf. Weiterhin sind in Umfangsrichtung um den Grundkörper 3 - lediglich unterbrochen durch die Schlitze 23e` - an den Laschen 23e zwei Vorsprünge 23f, 23g vertikal voneinander beabstandet angeordnet.

Weiterhin weist die Siebfläche 4 einen Unterschied im Vergleich zu der Siebfläche 4 gemäß der Figuren 1 bis 8 auf. Anstelle der "Kleeblatt-Form" der Öffnung 4b ist diese kreisförmig ausgebildet mit nach innen ragenden, rechteckförmigen Zähnen 4h. Des Weiteren ist der Bereich 4f um die Öffnung 4b abgeflacht, also horizontal und parallel zum Rand 4e. Die vertikalen Vorsprünge 5b des Sicherungsrings 5 sind nicht vorhanden, stattdessen ist ein radial nach innen ragender Vorsprung 5e ausgebildet, der nach erfolgter Montage des Griffs 23 in die Öffnung 4b in den Bereich zwischen den beiden umlaufenden Vorsprüngen der Laschen 23e eingreift. Die Abrisskante K ist hierbei im Querschnitt in Form einer verrundeten Ausnehmung, die sich teilweise in vertikaler Richtung nach oben erstreckt, ausgebildet.

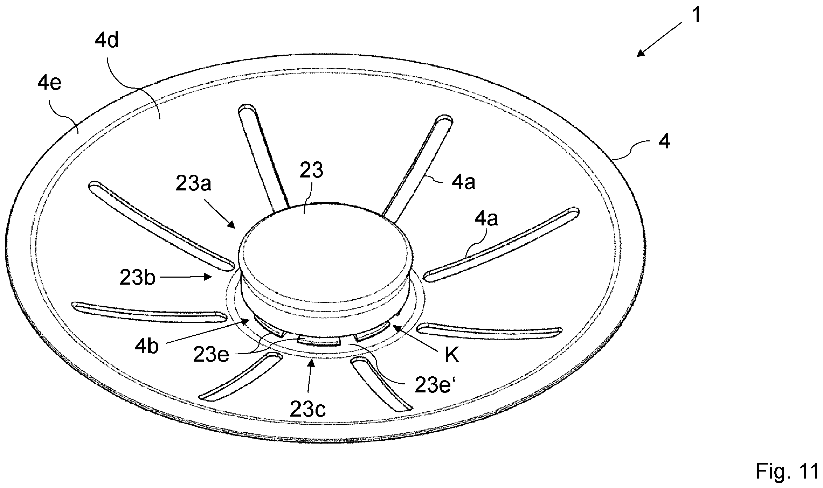

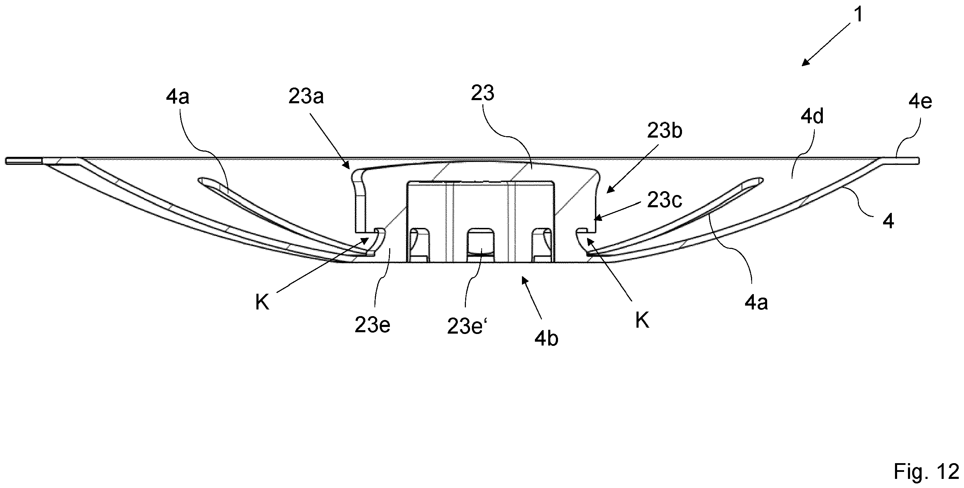

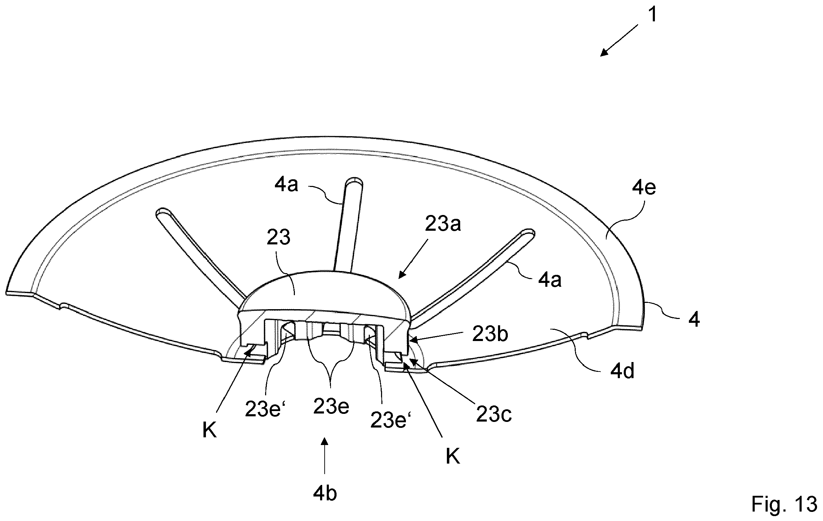

Figuren 11, 12 und 13 zeigen ein Siebkörbchen gemäß einer Ausführungsform der vorliegenden Erfindung in einer Explosionsdarstellung, in einer Übersichtsdarstellung und im Querschnitt.

In den Figuren 11 bis 13 ist im Wesentlichen ein Siebkörbchen 1 gemäß der Figuren 9 und 10 gezeigt. Im Unterschied zum Siebkörbchen 1 gemäß der Figuren 9 und 10 ist das Siebkörbchen 1 gemäß der Figuren 11 bis 13 einstückig ausgebildet. Im Einzelnen ist nicht nur der Griff 23 einteilig ausgebildet, sondern der Griff 23 und Siebfläche 4 sind zusammen beziehungsweise miteinander einstückig ausgebildet. Ein Sicherungsring 5 zur Festlegung des Griffs 23 ist damit nicht erforderlich.

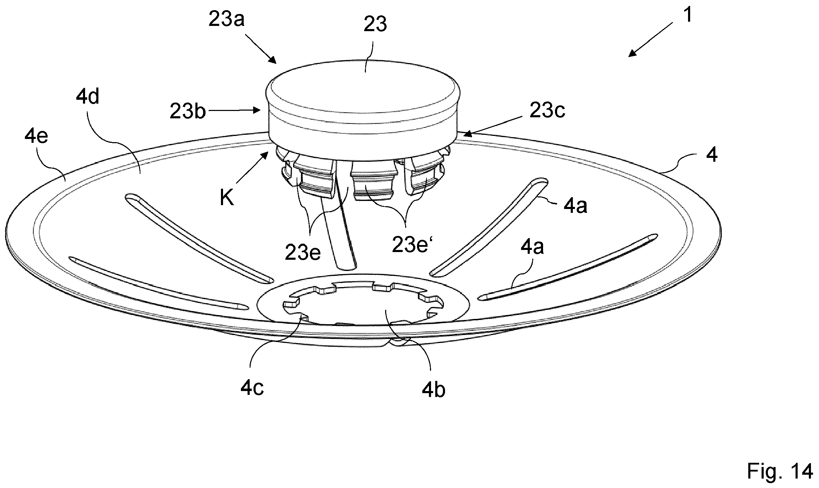

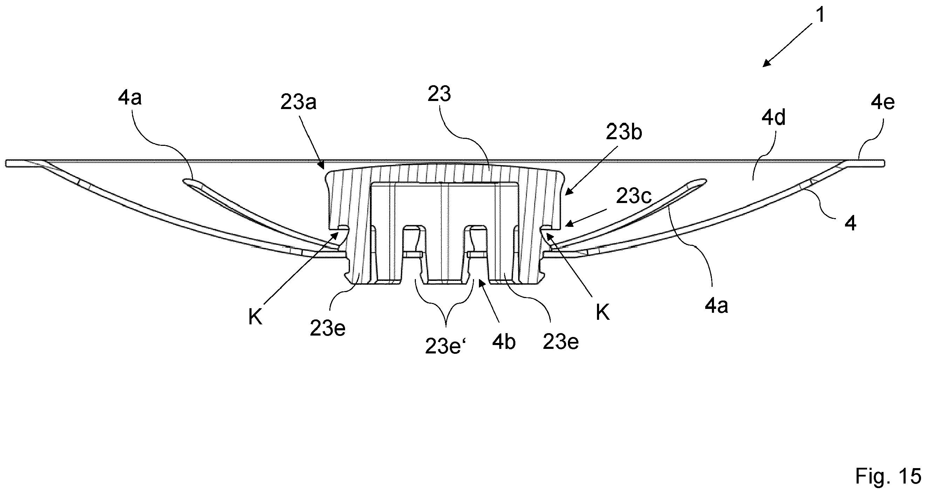

Figuren 14 und 15 zeigen ein Siebkörbchen gemäß einer Ausführungsform der vorliegenden Erfindung in einer Explosionsdarstellung und im Querschnitt.

In den Figuren 14 und 15 ist im Wesentlichen ein Siebkörbchen 1 gemäß den Figuren 11 bis 13 gezeigt. Im Unterschied zum Siebkörbchen 1 gemäß der Figuren 11 bis 13 ist das Siebkörbchen 1 gemäß der Figuren 14 und 15 zweiteilig ausgebildet mit einem Griff 23 und einer Siebfläche 4. Der Griff 23 kann an der Öffnung 4b der Siebfläche 4 lösbar festgelegt werden, insbesondere kann dieser - wie in den Figuren 14 und 15 gezeigt - mittels Einklipsen beziehungsweise einer Rastverbindung festgelegt werden. Der Griff 23 und die Siebfläche 4 beziehungsweise die Öffnung 4b sind dabei so ausgebildet, dass ein Sicherungsring 5 zur Festlegung des Griffs 23 an der Siebfläche 4 nicht erforderlich ist.

Zusammenfassend weist zumindest eine Ausführungsformen der vorliegenden Erfindung zumindest eines der folgenden Merkmale auf und/oder verwirklicht zumindest einen der folgenden Vorteile:
- Einfache, kostengünstige Herstellung.
- Spritzschutz.
- Einfache, zuverlässige Montage.
- Einfache Reinigbarkeit.
- Hohe optische und haptische Anmutung.
- Zuverlässige Entfernung von Restwasser.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Siebkörbchen
- 2: Kappe
- 2a: Oberer Bereich
- 2b: Mittlerer Bereich
- 2c: Unterer Bereich
- 3: Grundkörper
- 3a: Oberer Bereich
- 3b: Mittlerer Bereich
- 3c: Unterer Bereich
- 3d: Vorsprung Seitenfläche
- 3e: Vertikale Lasche
- 3e': Vertikaler Schlitz
- 3f: Kante
- 4: Siebfläche
- 4a: Radial verlaufender Schlitz
- 4b: Zentrale Öffnung
- 4c: Ausbuchtung
- 4d: abfallende Fläche
- 4e: Außenrand
- 4f: Abgeflachter Bereich
- 4g: Steg
- 4h: Zahn
- 4j: Öffnung Steg
- 5: Sicherungsring
- 5a: Umfangsfläche
- 5b: Vertikaler Vorsprung
- 5c: Vertiefung
- 5e: Vorsprung innere Umfangsfläche

- 23: Griff
- 23a: Oberer Bereich
- 23b: mittlerer Bereich
- 23c: Unterer Bereich
- 23e: Lasche
- 23e`: Schlitz

- A: Ablaufkelch
- F0, F1, F2: Flussrichtung Flüssigkeit
- K: Rücksprung

## Patentansprüche

1. Schmutzrückhaltevorrichtung (1) für einen Ablauf eines Sanitärbeckens, insbesondere eines Spülbeckens oder dergleichen, umfassend
eine Siebfläche (4), die von einem höheren (4e) zu einem tieferen Flächenbereich (4d, 4f) verlaufend ausgebildet ist, und
eine Griffeinrichtung (2, 3), die im Bereich des tieferen Flächenbereichs (4d, 4f) an der Siebfläche (4) angeordnet ist,
**dadurch gekennzeichnet, dass**
die Griffeinrichtung (2, 3) eine Flussunterbrechungseinrichtung, insbesondere eine Abrisskante (K), für den Fluss (F1, F2) einer Flüssigkeit aufweist, welche in Richtung des tieferen Flächenbereichs (4d) fließt, dergestalt, dass durch die Flussunterbrechungseinrichtung (K) der Fluss (F1, F2) der Flüssigkeit im tieferen Bereich (4d) zumindest teilweise gebrochen wird.

2. Schmutzrückhaltevorrichtung (1) gemäß Anspruch 1, **dadurch gekennzeichnet, dass** die Schmutzrückhaltevorrichtung (1) einteilig oder mehrteilig, insbesondere vierteilig, ausgebildet ist.

3. Schmutzrückhaltevorrichtung (1) gemäß einem der Ansprüche 1-2, **dadurch gekennzeichnet, dass** die Griffeinrichtung (2, 3) lösbar an der Siebfläche (4) angeordnet ist, insbesondere mittels einer Rastverbindung, und/oder
dass die Griffeinrichtung (2, 3) in einer Öffnung (4b) der Siebfläche (4) festlegbar ist, insbesondere wobei die Öffnung (4b) kleeblattförmig (4c) ausgebildet ist.

4. Schmutzrückhaltevorrichtung (1) gemäß einem der Ansprüche 1-3, **dadurch gekennzeichnet, dass** die Griffeinrichtung (2, 3) einteilig oder mehrteilig ausgebildet ist, insbesondere zweiteilig, umfassend zumindest einen Grundkörper (3) und eine Kappe (2), vorzugsweise wobei
die Griffeinrichtung (2, 3) an der Siebfläche (4) auf unterschiedlichen Seiten der Siebfläche (4) festlegbar ist.

5. Schmutzrückhaltevorrichtung (1) gemäß zumindest Anspruch 3, **dadurch gekennzeichnet, dass** die Griffeinrichtung (2, 3) und die Öffnung (4b) zusammenwirkend ausgebildet sind, um eine Verdrehsicherung der Griffeinrichtung (2, 3) in der Öffnung (4b) bereitzustellen, insbesondere wobei die Öffnung kleeblattförmig ausgebildet ist.

6. Schmutzrückhaltevorrichtung (1) gemäß zumindest Anspruch 4, **dadurch gekennzeichnet, dass** die Flussunterbrechungseinrichtung, insbesondere die Abrisskante (K), am Grundkörper (3) angeordnet ist.

7. Schmutzrückhaltevorrichtung (1) gemäß zumindest Anspruch 4, **dadurch gekennzeichnet, dass** die Kappe (2) an dem Grundkörper (3) form-, stoff- und/oder reibschlüssig, insbesondere mittels Verpressen und/oder Verkleben, festgelegt ist.

8. Schmutzrückhaltevorrichtung (1) gemäß zumindest Anspruch 4, **dadurch gekennzeichnet, dass** die Kappe (2) zumindest teilweise über die Flussunterbrechungseinrichtung, insbesondere die Abrisskante (K), hinausragt.

9. Schmutzrückhaltevorrichtung (1) gemäß zumindest Anspruch 4, **dadurch gekennzeichnet, dass** der Grundkörper (3) umfänglich verteilt zumindest zwei radiale Vorsprünge (3d) aufweist.

10. Schmutzrückhaltevorrichtung (1) gemäß einem der Ansprüche 1-9, **dadurch gekennzeichnet, dass** die Flussunterbrechungseinrichtung, insbesondere Abrisskante (K), einen Rücksprung umfasst, insbesondere wobei der Rücksprung zumindest eine Kante von mindestens 90 Grad umfasst.

11. Schmutzrückhaltevorrichtung (1) gemäß einem der Ansprüche 1-10, **dadurch gekennzeichnet, dass** die Griffeinrichtung (2, 3) zumindest eine Griffdurchlassöffnung, insbesondere in Form eines Schlitzes (3e'), aufweist.

12. Schmutzrückhaltevorrichtung (1) gemäß einem der Ansprüche 1-11, **dadurch gekennzeichnet, dass** die Siebfläche (4) zumindest zwei Siebdurchlassöffnungen (4a) zum Flüssigkeitsdurchlass aufweist, insbesondere in Form von Schlitzen (4a), vorzugsweise wobei
die Siebdurchlassöffnungen (4a) zumindest teilweise im tieferen Bereich (4d) angeordnet sind, insbesondere mit der Öffnung (4b) der Siebfläche (4) verbunden sind.

13. Schmutzrückhaltevorrichtung (1) gemäß einem der Ansprüche 1-12, **dadurch gekennzeichnet, dass** die Siebfläche (4) zumindest einen aus der Siebfläche (4) vorragenden Steg (4g) aufweist, insbesondere wobei der zumindest eine Steg (4g) in Form eines Rings um die Öffnung (4b) der Siebfläche (4) angeordnet ist.

14. Schmutzrückhaltevorrichtung (1) gemäß Anspruch 12 und 13, **dadurch gekennzeichnet, dass** der Steg (4g) Stegdurchlassöffnungen(4j) aufweist, insbesondere wobei die Stegdurchlassöffnungen (4j) und/oder die Griffdurchlassöffnungen (3e') zu den Siebdurchlassöffnungen (4a) der Siebfläche (4) korrespondieren und/oder mit diesen verbunden sind.

15. Ablaufkelch (A) zum Einsatz in einem Ablaufventil eines sanitären Aufnahmebehälters, insbesondere eines Spülbeckens, Waschbeckens oder dergleichen, **dadurch gekennzeichnet, dass** eine Schmutzrückhaltevorrichtung (1) gemäß einem der Ansprüche 1-14 angeordnet ist.
